# EUROPEAN PATENT APPLICATION

(11) **EP 4 763 757 A1**
(43) Date of publication of application: **24.06.2026**
(21) Application number: 25223790.4
(22) Date of filing: 16.12.2025
(51) Int. Cl.: B65G 47/248, B65B 23/14, B65B 35/30, B65B 35/58, B65G 47/26

(54) **DEVICE AND METHOD FOR MANIPULATING FLAT-LYING PRODUCTS USING CONTROLLED FINGER MECHANISMS**

(30) Priority: 20.12.2024 NL 2039419
(71) Applicant: Royal Houdijk B.V., 3133 KS Vlaardingen (NL)
(72) Inventor: DE JONG, Henricus Nicolaas Johannes, VLAARDINGEN (NL)
(74) Representative: Algemeen Octrooi- en Merkenbureau B.V.

(57) **Abstract**

In one aspect there is provided a device for manipulating and transporting flat baked products, comprising: a transport mechanism arranged to feed flat baked products grouped into shingled rows in a transport direction, each shingled row comprising a plurality of individual products, including one flat-lying product as a trailing product and the remaining products resting in an inclined orientation on the next product in the row in a shingled manner; plurality of manipulators each comprising a finger, and wherein the manipulators are configured to operate in sets of two fingers, wherein: a leading finger of the set is configured to contact and support a leading product of the shingled row in an upright orientation, and a trailing finger of the set is positioned at an incline relative to the trailing flat-lying product, and configured to engage the inclined products of the shingled row; wherein the manipulator of the trailing finger is configured to transition the trailing finger from the inclined position to an upright orientation, while the distance between the leading and trailing fingers decreases, thereby progressively bringing each product of the shingled row into an upright orientation while compacting the shingled row into a slug.

## Description

### TECHNICAL FIELD

The present invention relates to the field of automated product handling systems and, more specifically, to devices and methods for manipulating flat-lying products, such as baked goods, on a transport mechanism. The invention focuses on systems designed to optimize product positioning through controlled finger mechanisms, improving efficiency in downstream processing and packaging workflows.

### BACKGROUND

Automated systems for handling flat-lying products, such as baked goods, are widely used in production environments to streamline operations and reduce manual labour. These systems are designed to transport products along a production line and prepare them for downstream processes such as sorting, packaging, or assembly. Commonly used transport mechanisms, such as conveyor belts, often require additional tools or manipulators to position the products in a specific orientation or arrangement for subsequent processing steps.

In the food industry, products like cookies, biscuits, and other flat baked goods present unique challenges due to their irregular shapes, varying sizes, and fragile nature. Conventional handling systems typically rely on straightforward mechanical interventions to lift, push, or align these products. However, these solutions often fall short when handling non-uniform products or when precise positioning is critical. For instance, small variations in product dimensions can lead to inefficiencies, misalignments, or even product damage during the handling process.

An additional challenge arises from the growing demand for compact and efficient production lines. As packaging formats become smaller and more precise, the need for accurate product alignment and spacing becomes paramount. Conventional systems may struggle to meet these demands, as they often rely on linear or fixed manipulation techniques that lack the flexibility to adapt dynamically to varying product characteristics.

Moreover, current systems often lack mechanisms to ensure smooth transitions between handling phases. Abrupt movements or uncontrolled forces can cause products to slip, stack incorrectly, or sustain damage, leading to inefficiencies in production and increased waste.

Another significant limitation of existing handling systems is their constrained capacity for processing large volumes of products at high speeds. The inability to handle increased throughput efficiently often creates bottlenecks in production, reducing overall line performance and limiting the scalability of operations. As consumer demand for high-volume production grows, there is a pressing need for systems capable of maintaining precision and reliability while operating at higher speeds and capacities.

Accordingly, there is a need for a handling system capable of dynamically and accurately manipulating flat-lying products while maintaining product integrity and accommodating varying product characteristics, with an increased throughput volume.

### SUMMARY

One aspect of the present invention relates to a device for manipulating flat-lying products.

Another aspect of the present invention relates to a method for manipulating flat-lying products.

In one aspect there is provided a device for manipulating and transporting flat baked products, comprising:
a transport mechanism arranged to feed flat baked products grouped into shingled rows in a transport direction, each shingled row comprising a plurality of individual products, including one flat-lying product as a trailing product and the remaining products resting in an inclined orientation on the next product in the row in a shingled manner;
a plurality of manipulators each comprising a finger, and wherein the manipulators are configured to operate in sets of two fingers, wherein:
   a leading finger of the set is configured to contact and support a leading product of the shingled row in an upright orientation, and
   a trailing finger of the set is positioned at an incline relative to the trailing flat-lying product, and configured to engage the inclined products of the shingled row;
   wherein the manipulator of the trailing finger is configured to transition the trailing finger from the inclined position to an upright orientation, while the distance between the leading and trailing fingers decreases, thereby progressively bringing each product of the shingled row into an upright orientation while compacting the shingled row into a slug.

In another aspect there is provided a method for manipulating and transporting flat baked products grouped into shingled rows, each shingled row comprising a plurality of individual products, including one flat-lying product as a trailing product and the remaining products resting in an inclined orientation on the next product in the row in a shingled manner, the method comprising:
feeding the shingled rows of flat baked products in a transport direction using a transport mechanism;
aligning each shingled row with a set of two manipulators, each set comprising:
   a leading finger configured to contact and support a leading product of the shingled row in an upright orientation; and
   a trailing finger positioned at an incline relative to the trailing flat-lying product of the shingled row;
   transitioning the trailing finger from the inclined position to an upright orientation while decreasing the distance between the leading and trailing fingers; progressively bringing each product of the shingled row into an upright orientation while compacting the shingled row into a slug.

A "device" may be understood as an apparatus, system, or arrangement designed to perform specific tasks or functions, often involving multiple interconnected components to achieve a desired result. "Manipulating" refers to handling or controlling objects with precision, often through mechanical or automated means. "Flat baked products" may include items characterized by their planar geometry, such as cookies, biscuits, crackers, or similar baked goods, typically transported in groups referred to as shingled rows.

In the context of this description, the term "shingled" refers to an arrangement of items, such as flat baked goods or similar objects, wherein the items are partially overlapping in a manner comparable to roof shingles. This arrangement involves a sequential overlap where each item partially covers a portion of the adjacent item, typically in a linear or staggered pattern. Importantly, while most items within the arrangement may share a consistent orientation, the definition of "shingled" also and in particularly encompasses configurations where one or more items deviate from this orientation. For instance, the first item in the group may lie flat, fully horizontal at a zero-degree orientation, while subsequent items are positioned at an angle, such as 40 degrees, with the remaining items adopting a consistent orientation, such as 45 degrees.

The shingled arrangement may also include gradients in orientation, where the angle of each item gradually increases. For example, the first item may have an orientation of zero degrees, the second 15 degrees, the third 30 degrees, and the fourth 45 degrees, before reaching a stable angle for the remainder of the group. Variations may also involve more gradual or pronounced gradients, such as a transition from zero to 60 degrees, or other increments depending on the requirements of the process or application. Regardless of the specific configuration, the defining characteristic of a shingled arrangement is the partial overlap of adjacent items, allowing for compact stacking and efficient handling while accommodating different orientations or gradients within the arrangement.

The device comprises a transport mechanism arranged to feed flat baked products grouped into shingled rows in a transport direction. A "transport mechanism" may be understood as a system or assembly capable of moving objects from one location to another in a controlled and predictable manner. Examples include conveyor belts or other linear transport systems. Each shingled row comprises a plurality of products, including one flat-lying product as a trailing product and the remaining products resting in an inclined orientation on the next product in the row in a shingled manner. This arrangement ensures consistent feeding of the rows, facilitating further manipulation. An effect of this feature is the efficient and reliable feeding of products while maintaining their orientation, reducing interruptions and optimizing throughput.

The device further comprises a plurality of manipulators configured to operate in sets of two fingers. Each set comprises:
A leading finger configured to contact and support a leading product of the shingled row in an upright orientation.

A trailing finger positioned at an incline relative to the trailing flat-lying product of the row and configured to engage the inclined products of the shingled row.

The trailing finger is designed to transition from the inclined position to an upright orientation, while the distance between the leading and trailing fingers decreases. This arrangement progressively brings each product of the shingled row into an upright orientation and compacts the row into a slug. A "slug" refers to a compact arrangement of products aligned in an upright position for efficient transport or packaging. The manipulators may include finger mechanisms equipped with gripping or textured surfaces to enhance interaction with the products, reducing slippage and ensuring precise handling.

The device further comprises a sensor device, such as a photoelectric sensor, configured to determine the start and end of each shingled row. The timing of the manipulators and the position of the leading finger are synchronized based on the detected position of the first product in the shingled row. Synchronization is achieved through a control unit, which may be implemented as a microcontroller, programmable logic controller (PLC), or similar computational system. The control unit coordinates the manipulators with the transport mechanism and downstream processing, ensuring seamless integration with other handling or packaging stages. An effect of this arrangement is the reduction of errors in timing and positioning, improving efficiency and reducing waste.

The compacting of the shingled row into a slug is achieved by reducing the distance between the leading and trailing fingers. This can be implemented through several approaches, including increasing the speed of the manipulator associated with the trailing finger, decreasing the speed of the manipulator associated with the leading finger, or a combination thereof, executed either simultaneously or sequentially. The transition of the trailing finger from the inclined position to the upright orientation may be achieved through a curvature or change in the path along which the manipulator operates, ensuring a smooth and precise adjustment of product orientation.

An outfeed mechanism is provided to transfer the formed slug to the transport infeed conveyor of a packaging machine. The mechanism may involve lowering the leading finger at the end of the transport path to release the slug, followed by lowering the trailing finger to complete the handover. The speed and timing of the slugs are controlled and synchronized to match the speed and timing of the transport infeed of the packaging machine. This ensures compatibility with high-speed production environments, reducing misalignment and maximizing throughput.

Through the combination of these features, the device provides a robust solution for manipulating and transporting flat baked products with high precision, addressing limitations in conventional systems while improving adaptability and efficiency. In an example, a rear finger may be included, preferably with a rubber surface to improve grip on the products. It may be provided that a rubber surface consists of an elastomeric material designed to increase the coefficient of friction between the finger and the product. This design ensures that products are securely held during manipulation, even when dealing with smooth or irregularly shaped items. An effect of this feature is the prevention of product slippage during lifting, enhancing precision and reducing the risk of damage.

In an example, the device may comprise a sensor device, and preferably a photoelectric sensor device, configured to determine the start and end of each shingled row, wherein the timing of the manipulators and the position of the leading finger are synchronized to the position of the first product as determined by the sensor device. It may be provided that a sensor device, such as a photoelectric sensor, emits a beam of light to detect the presence and boundaries of shingled rows on the transport mechanism. Synchronizing the manipulators and the leading finger based on this detection allows precise timing and alignment of the manipulation process with the incoming rows. An effect of this feature is the reduction of handling errors, ensuring consistent manipulation and minimizing misalignment or interruption in downstream processes.

In an example, the compacting of the shingled row into a slug may be achieved by reducing the distance between the leading and trailing fingers through one of increasing the speed of the manipulator associated with the trailing finger, decreasing the speed of the manipulator associated with the leading finger, or a combination thereof, either simultaneously or sequentially. It may be provided that adjusting the speeds of the manipulators allows for controlled movement and alignment of products in the shingled row. Increasing the speed of the trailing manipulator ensures that products are gently compressed into a tighter arrangement, while decreasing the speed of the leading manipulator accommodates this movement. Simultaneous or sequential adjustments enable precise and adaptable compaction, which reduces the likelihood of product damage and ensures consistent slug formation.

In an example, the transition of the trailing finger from the inclined position to the upright orientation may be achieved by a curvature or a change in the path along which the manipulator operates. It may be provided that the manipulator path is designed to include a curvature or a gradual change that naturally adjusts the position of the trailing finger during operation. This arrangement eliminates the need for complex actuators for the transition, simplifying the mechanism and increasing reliability. An effect of this feature is a smoother and more controlled adjustment of product orientation, reducing mechanical wear and ensuring a seamless transition of products into the upright position.

In an example, the device may further comprise an outfeed mechanism configured to hand over the formed slug to the transport infeed conveyor of a packaging machine, wherein the leading finger is lowered at the end of the transport path to release the slug, and the trailing finger is subsequently lowered to complete the handover to the packaging machine. It may be provided that the outfeed mechanism ensures a coordinated handover by first lowering the leading finger to stabilize the slug and then lowering the trailing finger to finalize the transfer. This sequence minimizes disturbances to the slug's integrity, ensuring proper alignment and placement on the packaging machine's conveyor. An effect of this arrangement is an efficient and reliable integration with downstream packaging processes.

In an example, the speed and timing of the slugs during the handover may be controlled and synchronized to match the speed and timing of the transport infeed conveyor of the packaging machine. It may be provided that the synchronization ensures that slugs are transferred seamlessly without delays or misalignment. By matching the movement parameters of the outfeed mechanism with those of the packaging machine, this feature optimizes the flow of products and reduces the risk of congestion or interruptions. An effect of this synchronization is enhanced overall efficiency in the production and packaging line, allowing for high-speed operation without compromising precision.

In an example, the contact area of the leading and/or trailing fingers may be comprised of a material selected from rubber, silicone, or other elastomers, and may include a textured or patterned surface to enhance grip and prevent slippage of the products during manipulation. It may be provided that the elastomeric material offers flexibility and durability, while the textured surface increases friction between the finger and the products. This configuration ensures secure handling of products, particularly those with smooth or slippery surfaces. An effect of this feature is improved handling reliability, minimizing product movement or misalignment during manipulation.

In an example, the contact area of the leading and/or trailing fingers may be comprised of a material selected from polytetrafluoroethylene (PTFE), fluorinated ethylene propylene (FEP), or similar low-friction materials, and may include a smooth surface to reduce grip and facilitate controlled sliding of the products during manipulation. It may be provided that the low-friction material minimizes resistance, allowing products to slide smoothly along the fingers without sticking. This configuration is particularly useful for delicate or fragile products that may be prone to damage under high-friction conditions. An effect of this arrangement is the controlled and gentle handling of products, ensuring their integrity while maintaining precise manipulation.

In an example, the device may further comprise a damping mechanism integrated into the manipulators, configured to absorb and minimize shock during deceleration and compacting of the shingled row into a slug. It may be provided that the damping mechanism, such as a spring or pneumatic system, reduces the impact forces experienced during rapid deceleration or compression. This feature prevents sudden jolts or vibrations that could disrupt the alignment of products or cause mechanical wear. An effect of this arrangement is smoother operation, extending the longevity of the device and ensuring consistent slug formation.

In an example, the trailing finger may be positioned at an adjustable angle between 15° and 45° relative to the trailing flat-lying product. It may be provided that the adjustability allows the trailing finger to adapt to variations in product size, shape, or orientation. This flexibility ensures that products are engaged securely regardless of their initial configuration. An effect of this feature is enhanced adaptability, enabling the device to handle a broader range of products without requiring extensive reconfiguration.

In an example, the individual products in the shingled row upon infeed may have an angle of inclination relative to the transport direction between 0° and 45°. It may be provided that this range of angles accommodates products with different initial orientations while ensuring they remain stable during transport. An effect of this feature is consistent feeding of shingled rows, reducing the likelihood of misalignment or product overlap.

In an example, the angle of the trailing finger may be adjustable through an actuator system configured to dynamically adapt the angle during operation. It may be provided that the actuator allows precise real-time adjustments to the trailing finger's angle based on the detected characteristics of the shingled row. This capability enhances the device's responsiveness to variations in product configuration. An effect of this arrangement is improved handling accuracy and reduced setup time when switching between product types.

In an example, the angle of the trailing finger may be adjustable through a curvature of the track along which the manipulator operates. It may be provided that the curvature modifies the position of the trailing finger gradually as the manipulator moves along the track. This passive adjustment reduces mechanical complexity while achieving consistent alignment of the trailing finger. An effect of this feature is simplified operation and maintenance, ensuring reliable performance over extended use.

In an example, the device is configured to perform exclusively a forming operation on shingled rows of flat baked products that are already grouped prior to entering the device, wherein the device is free of stop means, abutment surfaces, or separating elements configured to interrupt or subdivide a continuous product stream. In this example, the manipulators operate solely to compact the shingled row into a slug without performing any separation of products or groups, such that all forces applied to the products during forming arise from relative movement between the products and the fingers, rather than from contact with a stationary stop or reference surface. Consequently, in an example, the device is configured to form, but not separate, the shingled row.

In an example, the shingled row of flat baked products is introduced into the forming region of the device in a rearward-loading configuration, wherein the products are not conveyed toward a forward stop or abutment, but instead are progressively engaged from behind by the trailing finger while the leading finger supports the leading product without acting as a stop. In this configuration, the forming of the slug is achieved without arresting the forward motion of the products against a fixed reference, thereby avoiding impact loading and reducing mechanical stress on the products. Consequently, in an example, the device is arranged for rearwardly loading relative to the forming direction.

In an example, the shingled row comprises a trailing product that is initially oriented substantially flat on the transport mechanism, having an orientation angle of approximately zero degrees relative to the transport plane, while one or more preceding products are arranged at progressively increasing inclination angles. The manipulators are configured such that the trailing finger engages the shingled row while the trailing product is still flat, and subsequently transitions the trailing product from the flat orientation toward an upright orientation during the compacting of the shingled row into the slug. Consequently, in an example, the trailing product is initially flat-lying.

In an example, the shingled row exhibits a non-uniform angular distribution of products prior to forming, wherein the inclination angle of successive products increases gradually from the trailing product toward the leading product. The device is configured to exploit this angular gradient during forming, such that products are progressively brought into an upright orientation in a controlled sequence, thereby reducing relative sliding forces and limiting bending stresses within individual products during slug formation. Consequently, in an example, the device is arranged for progressively bringing each product into an upright orientation.

In an example, the manipulators are configured to progressively rotate the trailing flat-lying product from an initial orientation of approximately zero degrees to a substantially upright orientation through a combined translational and rotational movement of the trailing finger, without the use of an external stop or abutment surface. The rotation is achieved while the distance between the leading and trailing fingers is reduced, such that the upright orientation of the products results from controlled relative motion rather than from impact against a stationary element. Consequently, in an example, the device is arranged for transitioning the trailing finger from the inclined position to an upright orientation.

In an example, the compacting of the shingled row into a slug is achieved by redistributing contact forces within the shingled row itself, wherein the products transmit forming forces to one another during the progressive upright positioning. The manipulators are configured such that no single product is subjected to a dominant external force from the device, but instead the forming forces are shared across the products of the shingled row, thereby reducing localized stress concentrations and improving product integrity during high-speed operation. Consequently, in an example, the device is arranged for progressively bringing each product in upright orientation, while compacting.

In an example, the compacting of the shingled row into the slug is achieved by relative motion between the leading finger and the trailing finger, wherein the trailing finger advances toward the leading finger while the leading finger maintains a substantially supporting function. The forming process is thereby controlled by differential movement of the fingers rather than by mutual movement toward a fixed midpoint, resulting in a forming kinematic that differs from symmetric pusher-based stacking systems. Consequently, the device is arranged for doing so, while the distance between the leading and trailing fingers decreases.

In an example, the leading finger is configured to support the leading product in an upright orientation without absorbing the kinetic energy of incoming products or defining a positional end stop for the shingled row. The leading finger thereby functions as a guide and support element rather than as a stop means, such that impulse absorption associated with stopping a continuous product stream is avoided during the forming of the slug. Hence, the leading finger is configured to contact and support.

In an example, the leading finger and trailing finger are assigned functionally distinct roles, wherein the leading finger primarily provides positional support to the leading product in the upright orientation, and the trailing finger primarily provides forming and compacting action on the shingled row. The fingers are thus not interchangeable in function, and the forming behavior of the device is defined by their coordinated but asymmetric operation.

In an example, the device is configured as a former-first system, wherein the formation of the slug from the shingled row occurs independently of any upstream or downstream separation logic. The device thereby enables integration into production lines where grouping and separation are performed outside the forming device, allowing the forming operation to be optimized solely for product orientation and compaction. Hence, the system in an example is arranged to add context without adding new elements.

In an example, the movement of the manipulators is controlled such that the energy imparted to the products during forming is distributed over a predefined forming path, thereby limiting peak forces acting on individual products. This controlled energy input enables reliable forming of fragile flat baked products at high throughput rates while minimizing breakage and deformation. Hence, the device in an example is arranged to transition the products while decreasing distance between the products.

In an example, the forming of the shingled row into the slug is performed within a compact forming region, enabling integration into short production line layouts while maintaining high processing speeds. The absence of separation and stop means allows continuous transport through the forming region, reducing line length and mechanical complexity.

It is to be understood that each and every example, embodiment, feature, or arrangement described in relation to an aspect of the disclosure may similarly apply to any other aspect of the disclosure, unless explicitly stated otherwise or technically incompatible. The features described are not limited to the specific combinations presented but may be freely combined, interchanged, or substituted with other disclosed features to achieve similar effects or fulfil equivalent functions within the scope of the invention. The disclosed aspects should be interpreted as illustrative rather than restrictive, and any variations apparent to a person skilled in the art are intended to fall within the scope of the claims.

### BRIEF DESCRIPTION OF THE DRAWINGS

The present disclosure will be explained in more detail below by means of examples of a device according to the present disclosure shown in the drawings, in which:
Fig. 1a shows in a perspective view, a device for manipulating and transporting flat baked products according to an aspect of the present disclosure;
Fig. 1b shows in a side view, the device for manipulating and transporting flat baked products according to an aspect of the present disclosure;
Fig. 2 shows in a perspective view, a device for manipulating and transporting flat baked products according to another aspect of the present disclosure;
Fig. 3a-3f show several steps of the manipulating and transporting flat baked products according to an aspect of the present disclosure.

### DETAILED DESCRIPTION

The present invention provides a device and method for manipulating and transporting flat baked products, designed to address challenges in product alignment and packaging efficiency. The invention is particularly suited for handling products such as cookies, crackers, or other baked goods that are fragile and vary in size and shape. The invention ensures precise manipulation and compacting of shingled rows of such products into slugs for downstream packaging.

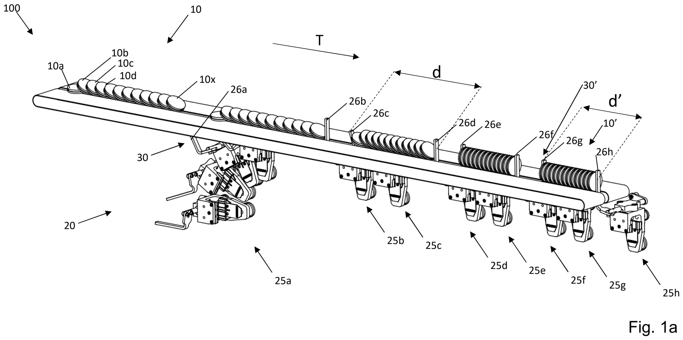

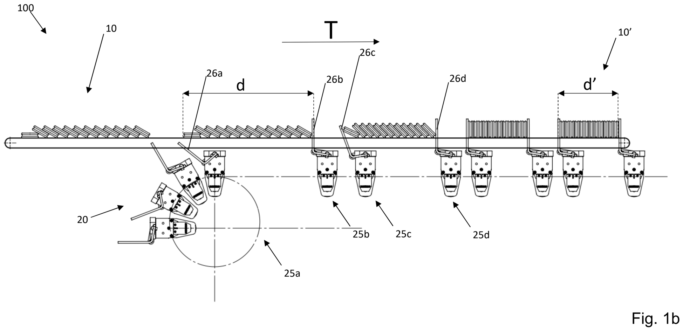

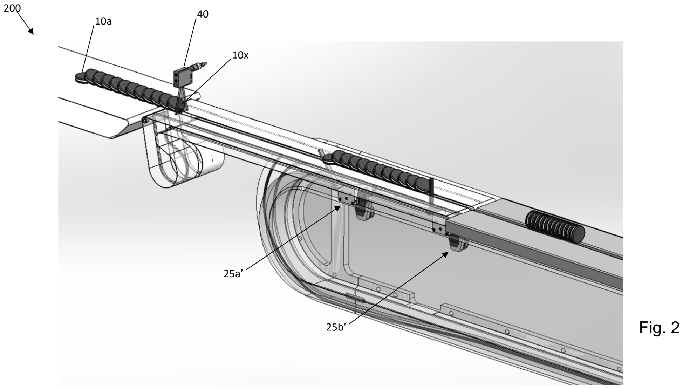

The device, as shown in figures 1a and 1b, is denoted as 100, while an alternative embodiment is illustrated in figure 2 and denoted as 200. These devices include several integrated systems to achieve the desired functions: a transport mechanism, manipulators with fingers, and a control unit for synchronization.

The transport mechanism (20) is configured to feed flat baked products grouped into shingled rows in a transport direction (T). Each shingled row (10) comprises multiple products (10a, 10b, 10c,...,10x), with one flat-lying product (10a) as the trailing product and the remaining products resting in an inclined orientation. Examples of the transport mechanism include conveyor belts with continuous or segmented belts, rollers, or chain-driven platforms. The transport mechanism ensures consistent feeding of shingled rows and maintains their orientation during transport. This feature minimizes misalignment and ensures smooth handling of fragile baked goods.

The manipulators (25a, 25b, 25c,...,25x) operate in sets of two fingers (26a, 26b; 26c, 26d; 26e, 26f;...), where each set comprises a leading finger (26b, 26d, 26f,...) and a trailing finger (26a, 26c, 26e,...). The leading finger is positioned upright to contact and support the leading product (10x) of the shingled row in an upright orientation. The trailing finger is initially inclined relative to the trailing flat-lying product and engages the shingled row.

In figure 1a, the trailing finger transitions from an inclined position (30) to an upright orientation (30'), while the distance (d) between the leading and trailing fingers decreases to compact the shingled row into a slug (32). This transition may be achieved by modifying the curvature of the track along which the manipulator moves. The compacting process minimizes gaps between products in the slug and ensures stability for subsequent handling. In figure 2, compacting is achieved by decreasing the speed of the leading finger relative to the trailing finger, allowing the shingled products to slide gently into alignment.

The fingers may include gripping surfaces composed of materials such as rubber, silicone, or other elastomers, providing enhanced grip to prevent slippage during manipulation. Alternatively, materials like polytetrafluoroethylene (PTFE) or fluorinated ethylene propylene (FEP) may be used for low-friction surfaces to facilitate controlled sliding. Textured or patterned surfaces further enhance the interaction between the fingers and products. Adjustable angles of the trailing finger, ranging from 15° to 45°, allow for adaptation to various product sizes and configurations. These adjustments may be performed dynamically through actuators or by modifying the curvature of the manipulator track.

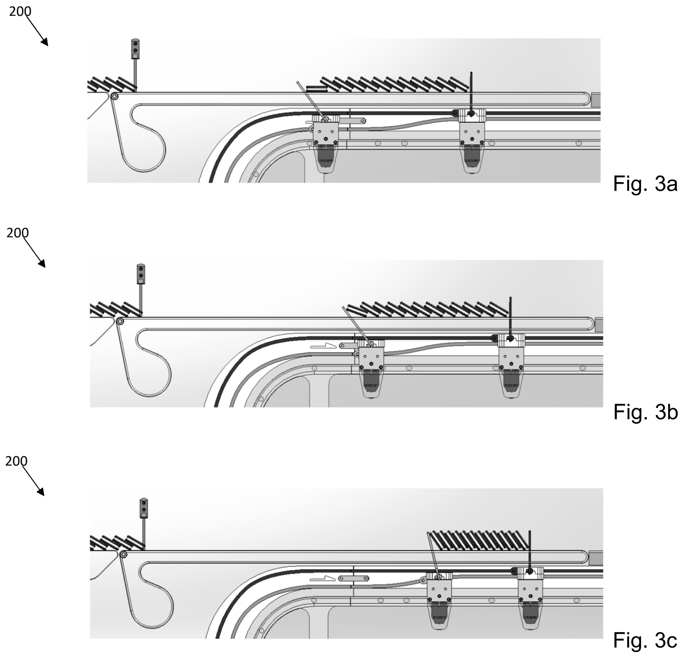

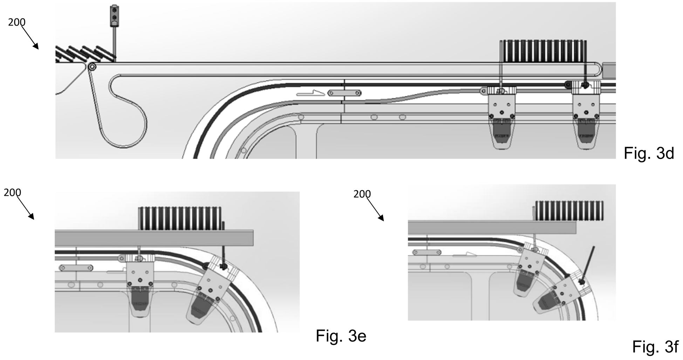

Figures 3a to 3h illustrate different stages of the operation. At the infeed (figure 3a), shingled rows are fed into the device. During transport, the products are manipulated by the leading and trailing fingers, progressively transitioning into an upright orientation (figures 3b-3d). At the end of the transport path (figure 3f), the slug is transferred to the packaging machine's transport infeed conveyor. This transfer is facilitated by an outfeed mechanism, which lowers the leading finger to release the slug, followed by lowering the trailing finger. The speed and timing of the slugs are synchronized with the packaging machine, ensuring seamless integration with downstream processes.

The device may incorporate sensor devices, such as photoelectric sensors, to detect the start and end of each shingled row. These sensors enable the control unit to synchronize the manipulators with the detected position of the first product in the row. The control unit may be implemented as a microcontroller, programmable logic controller (PLC), or equivalent computational system, coordinating the transport mechanism, manipulators, and outfeed mechanism. Synchronization ensures accurate timing, reducing misalignment and waste.

The compacting process, as shown in figures 1 and 2, may be achieved through various mechanisms. One approach involves increasing the speed of the trailing finger, decreasing the speed of the leading finger, or combining both adjustments either simultaneously or sequentially. These speed adjustments facilitate smooth alignment of the products without causing mechanical stress or damage.

The trailing finger's transition from an inclined position to an upright orientation can be implemented through passive means, such as a curvature in the manipulator track, or active means, such as an actuator system. These mechanisms ensure precise handling while reducing mechanical complexity and wear.

In an embodiment, the transport mechanism may include a dual-speed configuration, wherein an entry conveyor feeds the shingled rows at a first speed, and a downstream conveyor operates at a slower speed. This arrangement facilitates the creation or stabilization of shingled rows as the products transition from the faster entry conveyor to the slower downstream conveyor. The differential speeds assist in achieving a controlled alignment of products, ensuring consistent spacing and orientation of the shingled rows during infeed to the device.

The manipulators may be mounted on a track system with individual linear motor drives. This configuration allows precise control of the positioning, speed, and orientation of each manipulator. Such individual control facilitates real-time adjustments based on detected product characteristics, enhancing the adaptability of the device to variations in product flow or dimensions. The use of linear motors also reduces mechanical wear and provides smoother operation, contributing to the device's durability and reliability.

The trailing and leading manipulators may, as shown in figure 2, be positioned on different tracks, i.e. the leading manipulators on a first track and the trailing on a parallel second track. This allows for different trajectories of the fingers as shown in figures 3a-3h.

The transition of the trailing finger from an inclined orientation to an upright position may be further enhanced by a guide mechanism integrated into the track path. This guide mechanism may include a curved or adjustable profile that ensures smooth and controlled movement of the trailing finger. Such a design minimizes abrupt shifts and mechanical stress, reducing the likelihood of product damage during the alignment process.

To achieve precise synchronization with downstream systems, the device may include a transfer mechanism equipped with adaptive speed controls. This mechanism adjusts the velocity of the slugs as they are transferred to the transport infeed of the packaging machine. By dynamically synchronizing the slug transfer speed with the packaging line, the device ensures seamless integration, reducing the risk of disruptions or misalignments in the packaging process.

The manipulators, including the leading and trailing fingers, may incorporate surfaces designed for optimal interaction with the products. These surfaces may include a variety of materials and textures tailored to specific product requirements. For example, a high-friction material such as a textured rubber may be used to securely grip smooth or fragile products, while a low-friction material such as a fluoropolymer coating may be applied for products requiring gentle handling or controlled sliding. The use of interchangeable surfaces allows customization for different product types, enhancing the versatility of the device.

To further reduce mechanical shocks during the compacting process, the manipulators may integrate shock-absorbing components. These components may include springs, elastomeric pads, or pneumatic dampers positioned at critical junctions within the manipulator assembly. Such features ensure smooth deceleration of the manipulators during compacting, preserving product integrity and reducing wear on the mechanical components of the device.

In an embodiment designed for handling irregularly shaped products, the trailing finger may feature an adaptive engagement mechanism. This mechanism adjusts the contact point and pressure applied by the finger based on real-time feedback from sensors monitoring the shingled row. This adaptability ensures that even non-uniform products are aligned and compacted effectively, minimizing handling errors and enhancing throughput.

To improve the compacting and alignment process, the trailing finger may include an integrated adjustable angle mechanism. This mechanism allows the angle of the trailing finger to be dynamically modified during operation, ranging from an initial inclined orientation to an upright position. Such adjustability may be achieved through servo-driven actuators or mechanically coupled cam profiles. This feature ensures optimal alignment of products regardless of their initial orientation, providing consistent results across a wide range of product types.

The described device provides a robust solution for manipulating and transporting flat baked products, addressing limitations in conventional systems. By compacting shingled rows into slugs directly within the manipulator, the invention minimizes production line length and complexity. This integration enhances throughput while ensuring compatibility with high-speed production environments.

Based on the above description, a skilled person may provide modifications and additions to the method and arrangement disclosed, which modifications and additions are all comprised by the scope of the appended claims.

It will be clear that the intention of the above description is to shed light on the working of possible embodiments of the present invention, and not to limit the scope of protection of the invention. Starting from the description, a person skilled in the art is able to conceive of and use various embodiments that fall within the inventive concept and scope of protection of the present invention.

## Claims

1. A device (100, 200) for manipulating and transporting flat baked products (10a-10x), comprising:
a transport mechanism (20) arranged to feed flat baked products (10-10x) grouped into shingled rows (10) in a transport direction T, each shingled row comprising a plurality of individual products (10a, 10b, 10c,...,10x), including one flat-lying product (10a) as a trailing product and the remaining products resting in an inclined orientation on the next product in the row in a shingled manner;
a plurality of manipulators (25a-25x) each comprising a finger (26a-26x), and wherein the manipulators are configured to operate in sets of two fingers (26a-26b, 26c-26d, 26e-26f,...), wherein:
a leading finger (26b, 26d, 26f, 26h) of the set is configured to contact and support a leading product (10x) of the shingled row (10) in an upright orientation (10'), and
a trailing finger (26a, 26c, 26e, 26g) of the set is positioned at an incline relative to the trailing flat-lying product, and configured to engage the inclined products of the shingled row;
wherein the manipulator (25a, 25c, 25e, 25g) of the trailing finger is configured to transition the trailing finger (26a, 26c, 26e, 26g) from the inclined position (30) to an upright orientation (30'), while the distance (d) between the leading and trailing fingers decreases (d'), thereby progressively bringing each product of the shingled row into an upright orientation while compacting the shingled row into a slug (32).

2. The device according to claim 1, further comprising a sensor device and preferably a photoelectric sensor device configured to determine a start and end of each shingled row, wherein the timing of the manipulators and the position of the leading finger are synchronized to the position of the first product as determined by the sensor device.

3. The device according to claim 1 or 2, wherein the compacting of the shingled row into a slug is achieved by reducing the distance between the leading and trailing fingers through one of:
increasing the speed of the manipulator associated with the trailing finger,
decreasing the speed of the manipulator associated with the leading finger, or
a combination thereof, either simultaneously or sequentially.

4. The device according to claim 1, wherein the transition of the trailing finger from the inclined position to the upright orientation is achieved by a curvature or a change in the path along which the manipulator operates.

5. The device according to claim 1, further comprising an outfeed mechanism configured to hand over the formed slug to the transport infeed conveyor of a packaging machine, wherein:
the leading finger is lowered at the end of the transport path to release the slug; and
the trailing finger is subsequently lowered to complete the handover to the packaging machine.

6. The device according to claim 5, wherein the speed and timing of the slugs during the handover are controlled and synchronized to match the speed and timing of the transport infeed conveyor of the packaging machine.

7. The device according to claim 1, wherein the contact area of the leading and/or trailing fingers is comprised of a material selected from rubber, silicone, or other elastomers, and comprises a textured or patterned surface to enhance grip and prevent slippage of the products during manipulation.

8. The device according to claim 1, wherein the contact area of the leading and/or trailing fingers is comprised of a material selected from polytetrafluoroethylene (PTFE), fluorinated ethylene propylene (FEP), or similar low-friction materials, and comprises a smooth surface to reduce grip and facilitate controlled sliding of the products during manipulation.

9. The device according to claim 1, further comprising a damping mechanism integrated into the manipulators, configured to absorb and minimize shock during deceleration and compacting of the shingled row into a slug.

10. The device according to claim 1, wherein the trailing finger is positioned at an adjustable angle between 15° and 45° relative to the trailing flat-lying product.

11. The device according to claim 1, wherein the individual products in the shingled row upon infeed have an angle of inclination relative to the transport direction between 0° and 45°.

12. The device according to claim 10, wherein the angle of the trailing finger is adjustable through an actuator system configured to dynamically adapt the angle during operation.

13. The device according to claim 10, wherein the angle of the trailing finger is adjustable through a curvature of the track along which the manipulator operates.

14. A method for manipulating and transporting flat baked products grouped into shingled rows, each shingled row comprising a plurality of individual products, including one flat-lying product as a trailing product and the remaining products resting in an inclined orientation on the next product in the row in a shingled manner, the method comprising:
feeding the shingled rows of flat baked products in a transport direction using a transport mechanism;
aligning each shingled row with a set of two manipulators, each set comprising:
a leading finger configured to contact and support a leading product of the shingled row in an upright orientation; and
a trailing finger positioned at an incline relative to the trailing flat-lying product of the shingled row;
transitioning the trailing finger from the inclined position to an upright orientation while decreasing the distance between the leading and trailing fingers; progressively bringing each product of the shingled row into an upright orientation while compacting the shingled row into a slug.
